# DEMANDE DE BREVET EUROPEEN

(11) **EP 2 521 048 A1**
(43) Date de publication de la demande: **07.11.2012**
(21) Numéro de dépôt: 11305537.0
(22) Date de dépôt: 06.05.2011
(51) Int. Cl.: G06F 17/30

(54) **Procédé et système de recherche sur l'internet des objets**

(71) Demandeur: Alcatel Lucent, 75007 Paris (FR)
(72) Inventeur: Christophe, Benoit, 91620 Nozay (FR); Verdot, Vincent, 91620 Nozay (FR)
(74) Mandataire: Demulsant, Xavier

(57) **Abrégé**

Procédé de recherche pour répondre à une requête de recherche sur l'Internet des objets comprenant
- une étape préalable de fourniture d'une pluralité de structures ontologiques décrivant une pluralité d'objets;
- une étape préalable de production de modèles de sujets à partir des structures ontologiques ;
- une étape de vérification du type de recherche indiqué dans ladite requête ;
- une étape d'inférence du sujet de ladite requête ;
- une étape de calcul de la similarité entre le sujet inféré et au moins un modèle de sujets préétabli.

## Description

La présente invention se rapporte au domaine technique de la recherche sur l'Internet des objets.

On entend, ici, par « Internet des objets » diverses solutions techniques (technologies sans-fil, technologie Web, technologie informatique, TCP/IP, technologie d'identification électronique par exemple) permettant d'étendre l'Internet pour inclure les objets qui nous entourent. On parle alors de l'Internet des objets ou, en y transposant les standards du Web, du Web des objets.

L'Internet des objets, interconnectant des objets allant de simples objets identifiés par étiquettes électroniques à des objets dotés de systèmes informatiques actifs communicants, permet d'identifier ces objets, de capter, stocker, traiter et transférer des données s'y rattachant entre/dans des environnements physiques et virtuels. Ces environnements sont dits espaces intelligents.

Par « espace intelligent », on désigne ici un environnement comprenant une pluralité de capteurs, d'effecteurs, de moyens de communications fluides (l'informatique ubiquitaire/diffuse) et d'une intelligence embarquée (une intelligence ambiante) agencés pour assurer une gestion de l'information en fonction de contextes variés.

A titre d'exemple de ces environnements, on cite:
- un environnement professionnel (un bureau, une salle de réunion, un open-space, un département d'entreprise par exemple) comprenant une pluralité d'objets tels que des téléphones fixes/mobiles, des GPSs, des ordinateurs de bureau/portables, des imprimantes, des photocopieurs, des télécopieurs, des caméras, des écrans, des vidéoprojecteurs, des disques durs externes, des dossiers papier avec des étiquettes RFID par exemple ;
- un environnement domestique (une chambre, une maison, un hôtel, une résidence par exemple) comprenant une pluralité d'objets tels que des systèmes domotiques (des alarmes, des interphones, des Smartphones, des ordinateurs, des systèmes de chauffages, des télécommandes, des téléviseurs, des récepteurs radio, des chaînes Hi-Fi, des électroménagers tels qu'un lave-linge, un congélateur, une plaque électrique), des produits manufacturés (une lampe, un yaourt, une bouteille, ou une chaise étiquetés par exemple);
- un environnement médical, industriel, de transport, ou commercial par exemple tels qu'un aéroport, une gare, un centre commercial, une rue commerciale, un centre sportif, différents bâtiments d'une entreprise.

Portée par des progrès technologiques permanents (communications sans-fil en réseau, développement de la mobilité, Informatique ubiquitaire, diversification des systèmes d'identification et d'accès) et un changement profond de la société (environnements sociotechniques autonomes centrés sur l'individu, réseaux personnels ou PAN pour Personal Area Network), l'Internet des objets ne cessent d'intégrer de plus en plus d'objets du quotidien. Le document ("More than 50 Billion connected devices", Ericsson white paper, 284 23-3149 Uen, February 2011), estime que dans un futur proche plus de 50 milliards objets connectés seront couverts par l'Internet des objets.

Des moteurs de recherche sur l'Internet des objets sont donc proposés à l'effet de permettre la découverte d'un objet connecté en réponse à une requête de recherche émise par une machine (une application ou un processus) ou un utilisateur (un être humain). Une requête sur l'Internet des objets peut s'agir, par exemple, de la recherche, dans un espace intelligent, d'une lampe (équipée d'un système d'identification électronique) ayant certains attributs (localisation dans un espace intelligent, marque, puissance, durée de vie par exemple) pour interagir avec elle (éteindre, allumer, vérifier son état, récupérer un attribut, programmer une animation lumineuse par exemple).

Le contexte de recherche (c'est-à-dire le compromis rapidité-précision) d'une requête n'est certainement pas le même pour un utilisateur et une machine. En effet,
- une machine (souvent pourvue d'une grande capacité de calcul et un grand espace mémoire) requière généralement une recherche précise ;
- un utilisateur préfère généralement avoir rapidement des résultats de recherche même s'ils sont approximatifs. Sa cognition lui permet de juger la pertinence des résultats de recherche qui lui sont retournés.

Plus généralement, le contexte de recherche d'une requête varie d'un demandeur à un autre.

Cependant, les mécanismes de recherche existant sont soit exclusivement adaptés à un contexte de recherche d'une requête issue d'un utilisateur, soit exclusivement à un contexte de recherche d'une requête issue d'une machine.

Par conséquent, un inconvénient majeur des mécanismes de recherche connus est l'incapacité de prendre en charge efficacement à la fois des requêtes initiées par des utilisateurs et des requêtes initiées par des machines. Les solutions existantes sont très spécifiques et ne peuvent être performants à la fois pour un utilisateur et une machine.

L'invention vise notamment à remédier aux inconvénients précités.

Un objet de la présente invention est de proposer une méthode de recherche apte à effectuer une recherche sur l'Internet des objets avec différents contextes de recherche, indépendamment de la nature du demandeur (un utilisateur ou une machine).

Un autre objet de la présente invention est de proposer, en un même framework, un mécanisme de recherche sur l'Internet des objets agencé pour répondre à une requête de recherche ayant un contexte de recherche requis par un utilisateur ou par une application.

Un autre objet de la présente invention est d'adapter les méthodes/algorithmes de recherche aux contextes de recherche.

A cette fin, l'invention se rapporte, selon un premier aspect, à un procédé de recherche pour répondre à une requête de recherche sur l'Internet des objets comprenant
- une étape préalable de fourniture d'une pluralité de structures ontologiques décrivant une pluralité d'objets;
- une étape préalable de production de modèles de sujets à partir des structures ontologiques ;
- une étape de vérification du type de recherche indiqué dans ladite requête ;
- une étape d'inférence du sujet de ladite requête ;
- une étape de calcul de la similarité entre le sujet inféré et au moins un modèle de sujets préétabli.

Ce procédé comprend, en outre,
- une étape préalable d'établissement de représentations textuelles des structures ontologiques ;
- une étape d'extension desdits modèles de sujets ;
- une étape de comparaison entre la similarité entre le sujet inféré et au moins un modèle de sujets préétabli et un seuil indiqué dans ladite requête.

Avantageusement, la requête de recherche peut être soumise par un utilisateur ou une machine.

L'invention se rapporte, selon un deuxième aspect, à un système de recherche pour répondre à une requête de recherche sur l'Internet des objets comprenant
- une pluralité de structures ontologiques décrivant une pluralité d'objets ;
- des moyens de productions de modèles de sujets à partir des structures ontologiques ;
- des moyens d'inférence du sujet de ladite requête ;
- des moyens de calcul de la similarité entre le sujet inféré et au moins un modèle de sujets produit.

L'invention propose, selon un troisième aspect, un produit programme d'ordinateur implémenté sur un support mémoire, susceptible d'être mis en oeuvre au sein d'une unité de traitement informatique et comprenant des instructions pour la mise en oeuvre du procédé résumé ci-dessus.

D'autres caractéristiques et avantages de l'invention apparaîtront plus clairement et de manière concrète à la lecture de la description ci-après de modes de réalisation préférés, laquelle est faite en référence aux dessins annexés dans lesquels :
- la figure 1 illustre schématiquement le contexte d'application d'un mode de réalisation ;
- la figure 2 est un diagramme illustrant une méthode d'obtention de clusters basée sur des ontologies ; et
- la figure 3 illustre schématiquement une représentation fonctionnelle non limitative d'un mode de réalisation.

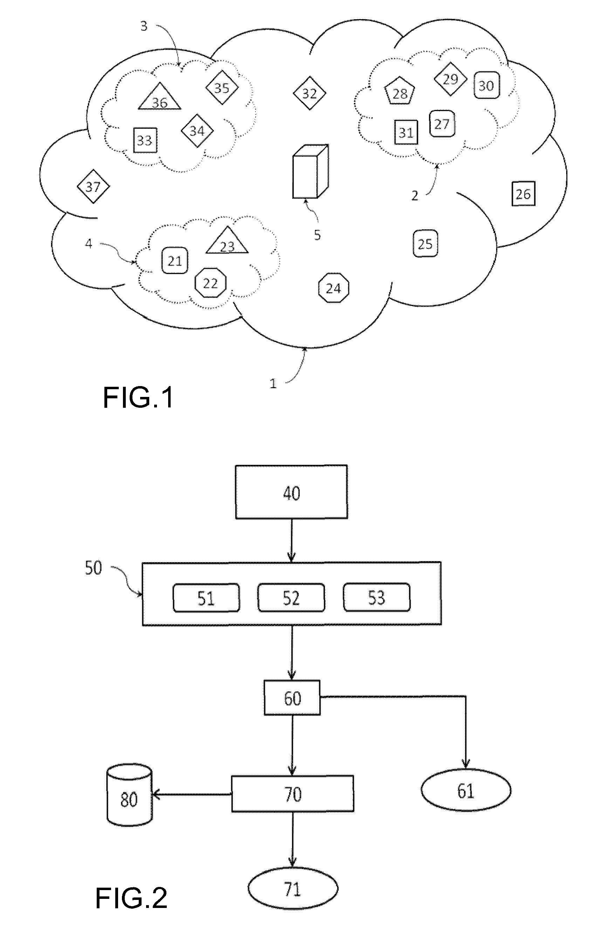

Sur la figure 1 est affiché un espace intelligent **1** couvrant une pluralité d'objets connectés **21-37** compris dans l'Internet des objets. L'espace intelligent **1** résulte généralement de la coopération et de l'interconnexion d'une pluralité de sous-espaces intelligents **2-4** et/ou d'objets connectés **24-26, 32,37.**

Un système 5 distribué de traitement de l'information (comprenant des ONS (Object Naming Service), des réseaux de communications ubiquitaires, des moyens informatiques logicielles/matérielles, des capteurs programmés par exemple) déployé d'une manière coopérative dans l'espace intelligent **1** est agencé pour supporter l'Internet des objets dans cet espace. Il permet en effet à un utilisateur, via une interface Web, d'interagir (vérifier la présence, consulter des informations ou utiliser une fonctionnalité d'un objet connecté par exemple) avec les objets connectés **21-37.** Il peut s'agir par exemple
- d'éteindre à distance une lampe équipée d'un système d'identification électronique (une étiquette RFID ou un puce sans contact par exemple);
- de lancer l'enregistrement d'un film passant sur une chaine de télévision ;
- de vérifier la présence d'un objet connecté quelconque dans un entrepôt ;
- de récupérer des informations (transit de la marchandise, date de fin de validité, origine par exemple) d'un produit connecté quelconque.

Notamment, le système **5** distribué de traitement de l'information comprend des moyens de recherche (un ou plusieurs moteur(s) de recherche) configurés pour effectuer une recherche sur l'Internet des objets en réponse à une requête de recherche.

De préférence, les sous-espaces intelligents **2-6** sont pourvus, respectivement, d'un moteur de recherche local, ces moteurs de recherche locaux étant fédéré par un moteur de recherche global.

Une recherche sur l'Internet des objets peut être ainsi obtenue via la mise en oeuvre de solutions distribuées permettant de supporter la prise en charge d'un grand nombre de requêtes de recherche.

Une requête de recherche peut être initiée par un utilisateur ou une machine depuis l'espace ou un sous-espace intelligent, via un objet connecté **21-37** (un ordinateur, un Smartphone, un PDA par exemple). Pour chercher un objet sur l'Internet des objets, le demandeur (un utilisateur ou une machine) soumet, au moteur de recherche de son sous-espace intelligent **2-4** ou son espace intelligent **1,** une requête de recherche. Cette dernière comprend les paramètres suivants :
- la requête elle-même (c'est-à-dire le sujet de la requête) basée
   o sur des concepts ontologiques décrivant l'objet recherché, s'il est connu par le demandeur ; ou
   o sur des mots clés, d'une manière similaire à une requête sur un moteur de recherche sur Internet tel que Google™ ;
- un contexte de recherche explicite qui définie le compromis rapidité-précision requis. Ce compromis peut être spécifié par le demandeur ou défini par défaut sous la forme par exemple
   o d'une valeur entre 0 et 1 (ou un pourcentage correspondant) indiquant le niveau de précision acceptable (un compromis de valeur 1 indique une recherche étendue sur tous les objets connectés, un compromis d'une valeur inférieure à 1 permet une recherche plus rapide mais approximative) ; ou
   o d'un délai de recherche maximal toléré.

Pour répondre à une requête de recherche dont le contexte de recherche est de type « précis », un moteur de recherche peut mettre en oeuvre des algorithmes, dits de parcours de graphe, basés sur l'utilisation de graphes et la comparaison stricte entre la structure de l'objet requis et celles des objets connectés (il est à noter qu'une ontologie peut être vue comme un graphe, et qu'une requête doit contenir ici le nom d'une structure ontologique).

Dans le cas d'une requête dont le contexte de recherche est de type « flou », le moteur de recherche se base sur des techniques d'apprentissage automatique.

A cet égard, en référence à la figure 2, le moteur de recherche est pourvu
- de structures ontologiques **40** (comprenant des concepts et leurs inter- et intra-relations) décrivant des objets connectés ;
- un module **50** comprenant une pluralité de descripteurs **51-53** permettant de fournir des descriptions (représentations) textuelles des structures ontologiques **40** (réécrire dans des phrases les structures ontologiques **40) ;**
- une pluralité d'algorithmes d'apprentissage automatique **60** telle que la librairie « Mallet » (http://mallet.cs.umass.edu/) agencée pour générer des modèles de sujets **61** (ou « topic models » en anglais). Le nombre de ces modèles dépend de la cardinalité des concepts ontologique compris dans les structures (ou graphes) ontologiques **40.** Un modèle de sujet **61** est crée à chaque fois qu'un objet est ajouté à l'espace ou le sous-espace intelligent. Ces modèles de sujets **61** sont basés sur des concepts ontologiques réécrits dans des « phrases » par les descripteurs **51-53.**

Avantageusement, les modèles de sujets **61** sont établis à l'ajout des objets connectés, et non pas au moment de la recherche. Par conséquent, la production des modèles de sujets **61** n'introduit pas de temps additionnel au moment de la recherche.

Les descripteurs **21-23** comprennent une pluralité de types de descripteurs tels que des descripteurs par nom de concept **51,** des descripteurs par nom complet **52,** des descripteurs par nom et attributs de concept **53,** des descripteurs par équivalence (des concepts équivalents par exemple), des descripteurs générant des phrases formées par le nom d'un concept et les noms de tous ses ascendants, des descripteurs contextuels par exemple.

Les algorithmes d'apprentissage automatiques **60** effectuent une analyse statistique (fréquence d'apparition par exemple) et terminologique (reconnaissance morphologique et sémantique par exemple) de la représentation textuelle, produite par les descripteurs **51-53,** des structures ontologiques **40** pour en produire des modèles de sujets **61.**

De préférence, les modèles de sujets **61** similaires sont classifiées en catégories (clusters) à l'aide des techniques de classification automatique telle que la clusterisation. Il en résulte une catégorisation des structures ontologiques **40.**

Les modèles de sujets fournis par les algorithmes d'apprentissage automatique **3** sont étendus (étape **70** de la figure 2) en utilisant une base de données lexicale **80** (le service Wordnet, des dictionnaires par exemple) afin de couvrir au mieux les concepts, donnant lieu à des modèles de sujets étendus **71.** Plus généralement, la base de données lexicale **80** peut être toute ressource terminologique extérieure aux concepts ontologique **40** permettant d'identifier des termes sémantiquement chargés dans les représentations des structures ontologiques **40** rendue par les descripteurs **51-53.**

Pour répondre à une requête de recherche dont le contexte de recherche est de type « flou », le moteur de recherche utilise de nouveau les algorithmes d'apprentissage automatiques **60,** et particulièrement les modèles de sujets **61, 71** déjà générés, pour reformuler la requête soumise. Autrement dit, on infère le sujet que la requête de recherche comprend (http://mallet.cs.umass.edu/topics.php).

Le sujet inféré convient à un certain coefficient de similarité avec un sujet parmi les modèles de sujets **61, 71.** En d'autres termes, des mesures de similarités (lexique et sémantique) entre le sujet inféré et les modèles de sujets **61, 71,** permettent de déterminer un coefficient de corrélation avec un modèle des sujets **61, 71.** Ce coefficient représente la probabilité avec laquelle le sujet de la requête de recherche appartient à un modèle de sujets donné parmi les modèles de sujets **61, 71.** Si cette probabilité est supérieure à un seuil indiqué dans la requête (un seuil spécifié par le demandeur ou défini par défaut), alors le moteur de recherche retourne, en réponse à cette requête, l'objet correspondant au sujet le plus proche du (le plus similaire au) sujet inféré.

Il en résulte que le (ou les) objet(s) qui conviennent le plus au sujet inféré est (sont) retourné(s) en réponse à la requête de recherche reçue par le moteur de recherche.

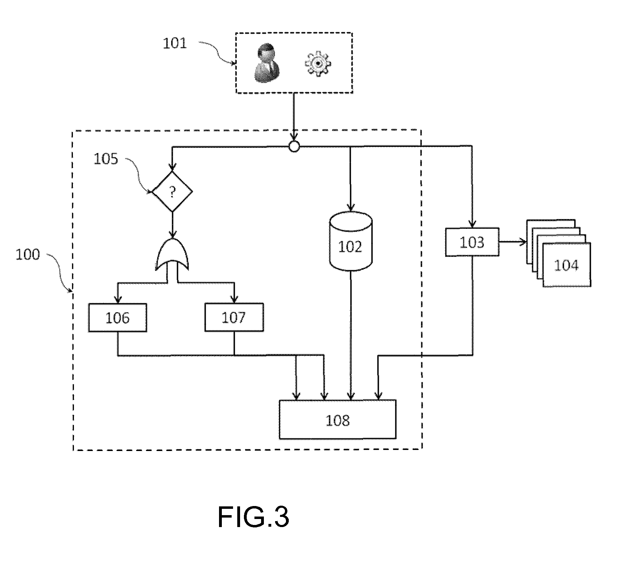

Un framework global d'une recherche dont le contexte est de type « flou » ou « précis » est représenté sur la figure 3. Une requête lancée par un demandeur **101** (qu'il soit un utilisateur ou une machine) et reçue par un moteur de recherche local **100** a la forme suivante :
Recherche(«requête»,«identifiant_requête»,«type de recherche»,«seuil»)

Afin de répondre au plus vite possible à la requête de recherche initiée par le demandeur **101** (une personne ou une machine), il est préférable de consulter d'abord l'historique des réponses aux requêtes antérieures auprès d'une base de données locale **102 :** Recherche_dans_historique_local(«requête»).

Une réponse **108** peut être aussi apportée à cette requête en interrogeant un moteur de recherche global **103** connecté à une pluralité de moteurs de recherche locaux **104.**

De préférence, le moteur de recherche global **103** interroge au moins un moteur de recherche local **104** d'un sous-espace intelligent spatialement proche du moteur de recherche local **100** qui a reçu la requête de recherche.

Dans un mode de réalisation, si la base de données locale **102** de l'historique des requêtes antérieures ne comprend pas une réponse à la requête reçue, alors une réponse **108** est recherchée auprès des moteurs de recherche locaux aux sous-espaces intelligents se trouvant au voisinage du demandeur **101.** Ce voisinage peut être déterminé en se basant sur un identifiant du demandeur (adresse IP, login, nom de session, coordonnées GPS par exemple).

Avantageusement, les sous-espaces intelligents proches entre eux comprennent généralement des objets connectés similaires (des clusters d'objets) constituant une sorte de différents « centres d'intérêts » pour les demandeurs **101.**

Par ailleurs, le moteur de recherche local **100** est agencé pour déterminer (étape **105** sur la figure 3) le type de recherche, à savoir « précis » ou « flou » : Déterminer(«identifiant_requête»,«type_de_recherche», «seuil»). Ensuite, en fonction du type de recherche déterminé, un module de recherche précise **106** ou un module de recherche floue **107** est utilisé pour retourner un résultat de recherche **108.** Par conséquent, une recherche de type « flou » ou « précis » est accomplie conformément aux méthodes de recherche décrites ci-dessus.

Notamment, les différentes approches de recherche, à savoir utilisant l'historique, un moteur de recherche global **103,** des algorithmes de recherche précis (dans le cas d'une recherche de type «précis »), ou des techniques d'apprentissage automatique (dans le cas d'une recherche de type « flou »), peuvent être exécutées en parallèle, d'une manière séquentielle, ensemble ou séparément.

Il est à noter que la méthode (ou framework) de recherche sur l'Internet des objets décrite ci-dessus comprend en particulier :
- une étape préalable de fourniture de structures ontologiques **40** décrivant les différents aspects (pragmatiques, sémantiques, fonctionnels, définitionnels, cognitifs, structurels par exemple) des objets connectés ;
- une étape d'application d'au moins une fonction d'apprentissage automatique (à l'aide des descripteurs **51-53** et les algorithmes d'apprentissage automatique **60)** sur ces structures ontologiques **40** pour produire des « clusters » de concepts (des modèles de sujets **61, 71)** et des les indexer par la suite ;

- une étape de vérification dans la requête du type de recherche ;
- si le type de la recherche est « flou », alors
   o une étape d'inférence du sujet de la requête ;
   o une étape de calcul de la distance (ou de sa similarité) (notamment de la distance sémantique) du sujet inféré par rapport aux clusters (modèles de sujets **61, 71)** préétablis. Par rapport au seuil indiqué dans la requête, les objets correspondants au(x) cluster(s) le(s) plus proche(s) du sujet inféré sont retournés en tant que réponse à la requête ;
- si le type de recherche est « précis », alors des algorithmes de recherche précis sont exécutés pour apporter une réponse à la requête.

Les méthodes de recherche, décrites ci-dessus, d'objets connectés sur l'Internet des objets présentent un certain nombre d'avantages. Elles permettent, en effet,
- d'avoir des résultats adaptés au contexte de recherche du demandeur en termes de compromis rapidité-précision. Ainsi, les objets connectés peuvent être indexés à l'aide d'un seul moteur de recherche destiné à la fois à un utilisateur et à une machine ;
- de proposer un seul outil de recherche sur l'Internet des objets valable à la fois pour un utilisateur ainsi que pour une machine ;
- d'adapter la recherche au type de recherche, peu important le demandeur est un utilisateur ou une machine ;
- un mécanisme de recherche complet grâce à l'utilisation de définitions ontologiques riches des objets.

## Revendications

1. Procédé de recherche pour répondre à une requête de recherche sur l'Internet des objets comprenant
- une étape préalable de fourniture d'une pluralité de structures ontologiques **(40)** décrivant une pluralité d'objets **(21-37);**
- une étape préalable de production de modèles de sujets **(61)** à partir des structures ontologiques ;
- une étape de vérification du type de recherche indiqué dans ladite requête ;
- une étape d'inférence du sujet de ladite requête ;
- une étape de calcul de la similarité entre le sujet inféré et au moins un modèle de sujets **(61)** préétabli.

2. Procédé selon la revendication 1, **caractérisé en ce qu'**il comprend, en outre, une étape préalable d'établissement de représentations textuelles des structures ontologiques **(40).**

3. Procédé de selon l'une quelconque des revendications 1 ou 2, **caractérisé en ce qu'**il comprend, en outre, une étape d'extension **(70)** desdits modèles de sujets.

4. Procédé selon l'une quelconque des revendications précédentes, **caractérisé en ce qu'**il comprend, en outre, une étape de comparaison entre ladite similarité et un seuil indiqué dans ladite requête.

5. Procédé selon l'une quelconque des revendications précédentes, **caractérisé en ce qu'**il comprend en outre une étape d'interrogation d'une base de données locale **(102)** de l'historique des requêtes antérieures.

6. Procédé selon l'une quelconque des revendications précédentes, **caractérisé en ce qu'**il comprend une étape d'interrogation d'un moteur de recherche global **(103)** connecté à une pluralité de moteur de recherche locaux **(104).**

7. Procédé selon l'une quelconque des revendications précédentes, **caractérisée en ce que** la requête est soumise par une machine.

8. Système de recherche pour répondre à une requête de recherche sur l'Internet des objets comprenant
- une pluralité de structures ontologiques **(40)** décrivant une pluralité d'objets **(21-37);**
- des moyens de productions de modèles de sujets **(61)** à partir des structures ontologiques **(40) ;**
- des moyens d'inférence du sujet de ladite requête ;
- des moyens de calcul de la similarité entre le sujet inféré et au moins un modèle de sujets **(61)** produit.

9. Système selon la revendication précédente, **caractérisé en ce qu'**il comprend, en outre, une base de données lexicale **(80).**

10. Produit programme d'ordinateur implémenté sur un support mémoire, susceptible d'être mis en oeuvre au sein d'une unité de traitement informatique et comprenant des instructions pour la mise en oeuvre d'un procédé selon l'une des revendications 1 à 7.

## Revendications modifiées

### Revendications modifiées conformément à la règle 137(2) CBE.

**1.** Procédé de recherche pour répondre à une requête de recherche sur l'Internet des objets comprenant
- une étape préalable de fourniture d'une pluralité de structures ontologiques (**40**) décrivant une pluralité d'objets (**21-37**);
- une étape préalable de production de modèles de sujets (**61**) à partir des structures ontologiques ;
- une étape de détermination du type de recherche indiqué dans ladite requête ;
- si la recherche est de type « flou », une étape d'inférence du sujet de ladite requête ;
- une étape de calcul de la similarité entre le sujet inféré et au moins un modèle de sujets (**61**) préétabli, l'objet correspondant au sujet le plus similaire au sujet inféré étant retourné en réponse à la dite requête.

**2.** Procédé selon la revendication 1, **caractérisé en ce qu'**il comprend, en outre, une étape préalable d'établissement de représentations textuelles des structures ontologiques (**40**).

**3.** Procédé de selon l'une quelconque des revendications 1 ou 2, **caractérisé en ce qu'**il comprend, en outre, une étape d'extension (**70**) desdits modèles de sujets.

**4.** Procédé selon l'une quelconque des revendications précédentes, **caractérisé en ce qu'**il comprend, en outre, une étape de comparaison entre ladite similarité et un seuil indiqué dans ladite requête.

**5.** Procédé selon l'une quelconque des revendications précédentes, **caractérisé en ce qu'**il comprend en outre une étape d'interrogation d'une base de données locale (**102**) de l'historique des requêtes antérieures.

**6.** Procédé selon l'une quelconque des revendications précédentes, **caractérisé en ce qu'**il comprend une étape d'interrogation d'un moteur de recherche global (**103**) connecté à une pluralité de moteur de recherche locaux (**104**).

**7.** Procédé selon l'une quelconque des revendications précédentes, **caractérisée en ce que** la requête est soumise par une machine.

**8.** Système de recherche pour répondre à une requête de recherche sur l'Internet des objets comprenant
- une pluralité de structures ontologiques (**40**) décrivant une pluralité d'objets (**21-37**);
- des moyens de productions de modèles de sujets (**61**) à partir des structures ontologiques (**40**) ;
- des moyens d'inférence du sujet de ladite requête ;
- des moyens de calcul de la similarité entre le sujet inféré et au moins un modèle de sujets (**61**) produit.

**9.** Système selon la revendication précédente, **caractérisé en ce qu'**il comprend, en outre, une base de données lexicale (**80**).

**10.** Produit programme d'ordinateur implémenté sur un support mémoire, susceptible d'être mis en ouvre au sein d'une unité de traitement informatique et comprenant des instructions pour la mise en oeuvre d'un procédé selon l'une des revendications 1 à 7.
